# EUROPEAN PATENT APPLICATION

(11) **EP 4 434 826 A1**
(43) Date of publication of application: **25.09.2024**
(21) Application number: 23212243.2
(22) Date of filing: 27.11.2023
(51) Int. Cl.: B60T 8/17

(54) **SYSTEM AND METHOD FOR ROAAS USING AI/ML MODEL TO SET AUTO BRAKE VALVE**

(30) Priority: 23.03.2023 IN 202311020477; 17.08.2023 US 202318235115
(71) Applicant: Rockwell Collins, Inc., Cedar Rapids, IA 52498 (US)
(72) Inventor: PARIKH, Bhavik Ajay, Hyderabad (IN); PANDEY, Pranav, Hyderabad (IN)
(74) Representative: Dehns

(57) **Abstract**

A system may include an auto brake valve (116) installed in an aircraft, an auto brake selector (ABS) switch communicatively coupled to the auto brake valve (116), and a runway overrun awareness and alerting system (ROAAS) (104) communicatively coupled to the auto brake valve (116). The ABS switch (112) may be configured to have a manual ABS switch setting to control the auto brake valve (116). The ROAAS (104) may include at least one processor (106) configured to: obtain ROAAS output data, the ROAAS output data including at least one of selected runway, runway distance remaining, runway stopping point, or runway condition; obtain a trained artificial intelligence (Al) and/or machine learning (ML) model; based at least on the ROAAS output data and the trained AI and/or ML model, infer an ABS brake setting; and set the auto brake valve (116) in accordance with the ABS brake setting.

## Description

### CROSS-REFERENCE TO RELATED APPLICATIONS

The present application is related to and claims priority from: Indian Application Serial Number 202311020477, titled SYSTEM AND METHOD FOR ROAAS USING AI/ML MODEL TO SET AUTO BRAKE VALVE, filed March 23, 2023.

### BACKGROUND

Currently, runway overruns upon landing are largely considered as one of the greatest operational risks in commercial air transport, and to date, they are still a major contributor to accidents. Currently, the runway overrun awareness and alerting system (ROAAS) provides an aid to flight crew awareness of aircraft stopping-points relative to the approaching runway, based on a real-time aircraft energy state; additionally, the ROAAS provides an aid for a flight crew decision for making a go-around and for timely use of all available stopping devices during a pending runway overrun situation. For example, the ROAAS may use the selected runway conditions from the flight management system (FMS) to perform calculations without requiring additional flight crew inputs. Currently, the auto brake selector (ABS) switch determines the deceleration rates at which the system slows down the aircraft.

### SUMMARY

In one aspect, embodiments of the inventive concepts disclosed herein are directed to a system. The system may include an auto brake valve installed in an aircraft, an auto brake selector (ABS) switch communicatively coupled to the auto brake valve, and a runway overrun awareness and alerting system (ROAAS) communicatively coupled to the auto brake valve. The ABS switch may be configured to have a manual ABS switch setting to control the auto brake valve. The ROAAS may include at least one processor configured to: obtain ROAAS output data, the ROAAS output data including at least one of selected runway, runway distance remaining, runway stopping point, or runway condition; obtain a trained artificial intelligence (Al) and/or machine learning (ML) model; based at least on the ROAAS output data and the trained AI and/or ML model, infer an ABS brake setting; and set the auto brake valve in accordance with the ABS brake setting.

In a further aspect, embodiments of the inventive concepts disclosed herein are directed to a method. The method may include: obtaining, by at least one processor of a runway overrun awareness and alerting system (ROAAS), ROAAS output data, the ROAAS output data including at least one of selected runway, runway distance remaining, runway stopping point, or runway condition, wherein the ROAAS is communicatively coupled to an auto brake valve installed in an aircraft, wherein the auto brake valve is communicatively coupled to an auto brake selector (ABS) switch, wherein the ABS switch is configured to have a manual ABS switch setting to control the auto brake valve; obtaining, by the at least one processor, a trained artificial intelligence (Al) and/or machine learning (ML) model; based at least on the ROAAS output data and the trained AI and/or ML model, inferring, by the at least one processor, an ABS brake setting; and setting, by the at least one processor, the auto brake valve in accordance with the ABS brake setting.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a system according to the inventive concepts disclosed herein.
FIG. 2 is a view of a portion of the system of FIG. 1 according to the inventive concepts disclosed herein.
FIG. 3 is a view of a portion of the system of FIG. 1 according to the inventive concepts disclosed herein.
FIG. 4 is a diagram of an exemplary embodiment of a method according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein may be directed to a method and system including an ROAAS configured to use an artificial intelligence (Al) and/or machine learning (ML) model to set an auto brake valve. Some embodiments may include moving towards more autonomous aircraft technology to reduce a need for a manual setting of an ABS switch by the flight crew when ROAAS alerts for a possible runway overrun (during or after landing) or "MAX BRAKE" so that the flight crew can concentrate on other more important tasks at hand.

In some embodiments, the ROAAS may provide outputs, such as distance remaining and stopping point for a runway. Using these ROAAS values and an artificial intelligence (Al) and/or machine learning (ML) technique supervised learning technique the autobrake switch can be used to set to desired position automatically without any intervention from the flight crew when ROAAS alerts for runway OVERRUN or MAX BRAKE.

In some embodiments, the ROAAS can be integrated with braking systems, such that max brakes can be applied automatically based on a ROAAS crew alerting system (CAS) messages of "MAX BRAKE" and "OVERRUN" which will save time in a critical situation. In some embodiments, the control of the auto brake selection may remain with the flight crew, and the auto brake selection may act as an aid for flight crew during critical situation like runway "OVERRUN" and "MAX BRAKE".

Currently, a ROAAS is intended to reduce risk of overrun during landing by providing timely and distinctive alerts to the flight crew when the airplane is at risk of not being able to stop on the available distance to the end of the runway. Currently, the ROAAS may takes inputs from a flight management system (FMS) (e.g., a destination airport), GPS data (e.g., latitude, longitude etc.), a radio altimeter (e.g., radio altitude), an air data computer (ADC) (e.g., air temperature, pressure, altitude, etc.), an EICAS (e.g., (runway condition, autobrake setting, etc.), an IRS and/or AHRS (e.g., pitch angle, longitudinal acceleration, etc.), an airport database (e.g., airport data), aircraft parameters (autobrake scalars, wheel height, etc.), and application configuration (Activation Heights, Ground Speed Suppression etc.). The ROAAS output includes Status Output (Inhibits, source failure etc.), Display Values (Selected runway, distance remaining etc.) and Alert Outputs (In Air alerts, On Ground alerts). Currently, based on the autobrake setting selected by the flight crew, the ROAAS computes if there is a possibility of runway overrun. Currently, the auto brake selection switch needs to be manually operated by the flight crew when the ROAAS displays a runway "OVERRUN" or "MAX BRAKE" alert. Currently, the ROAAS and autobrake selection switch are not integrated, and the flight crew needs to change the autobrake selection switch again manually when there is a possibility of runway overrun.

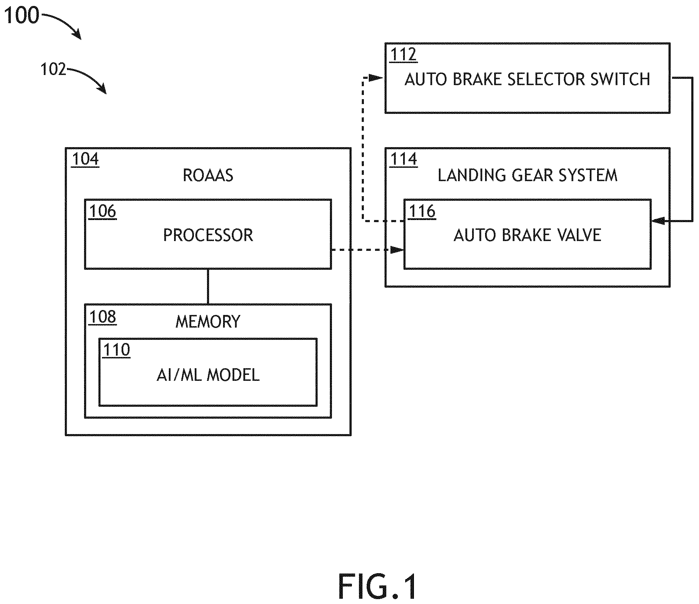

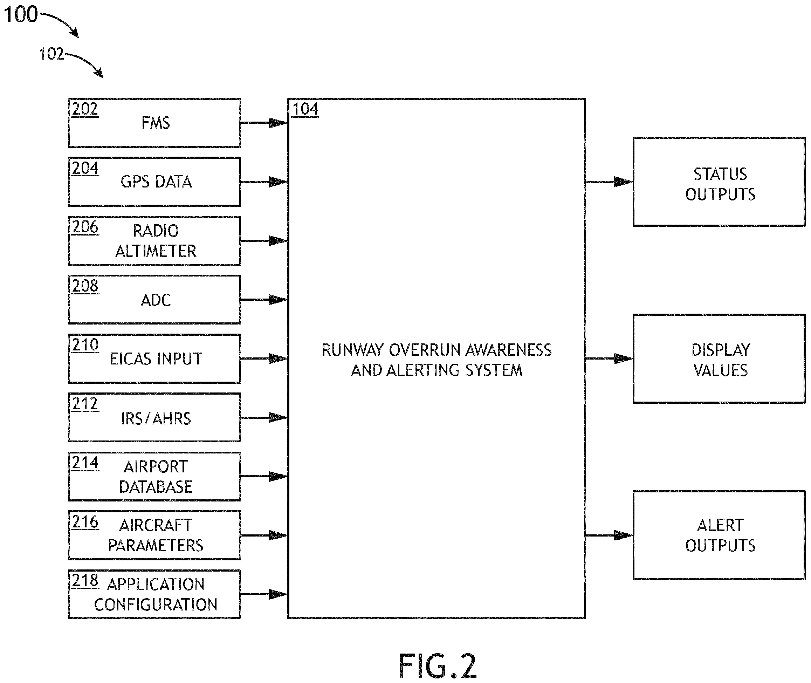

Referring now to FIGS. 1-3, an exemplary embodiment of a system 100 according to the inventive concepts disclosed herein is depicted. In some embodiments, the system 100 may include an aircraft 102 (e.g., a piloted, remote piloted, and/or uncrewed aerial vehicle (UAV)). The system 100 may include at least one ROAAS 104, at least one ABS switch 112, at least one landing gear system 114, at least one FMS 202, at least one global position system (GPS) 204, at least one radio altimeter 206, at least one air data computer (ADC) 208, at least one engine indication and crew alerting system (EICAS) 210, at least one inertial reference system (IRS) and/or AHRS 212, at least one airport database 214 maintained in memory, at least one aircraft parameters 216 maintained in memory, and/or at least one application configuration 218 maintained in memory, some or all of which may be communicatively coupled at any given time.

In some embodiments, any or all of the ROAAS 104, the ABS switch 112, the landing gear system 114, the FMS 202, the GPS 204, the radio altimeter 206, the ADC 208, the EICAS 210, the IRS and/or AHRS 212, the airport database 214 maintained in memory, the aircraft parameters 216 maintained in memory, and/or the application configuration 218 maintained in memory may be installed onboard the aircraft 102. In other embodiments, some or all of the ROAAS 104, the ABS switch 112, the landing gear system 114, the FMS 202, the GPS 204, the radio altimeter 206, the ADC 208, the EICAS 210, the IRS and/or AHRS 212, the airport database 214 maintained in memory, the aircraft parameters 216 maintained in memory, and/or the application configuration 218 maintained in memory, such as in an air-traffic control. In other embodiments, some or all of the ROAAS 104, the ABS switch 112, the landing gear system 114, the FMS 202, the GPS 204, the radio altimeter 206, the ADC 208, the EICAS 210, the IRS and/or AHRS 212, the airport database 214 maintained in memory, the aircraft parameters 216 maintained in memory, and/or the application configuration 218 maintained in memory may be redundantly installed onboard and off-board of the aircraft.

The landing gear system 114 may be installed in the aircraft 102. The landing gear system 114 may include at least one auto brake valve 116 installed in the aircraft 102.

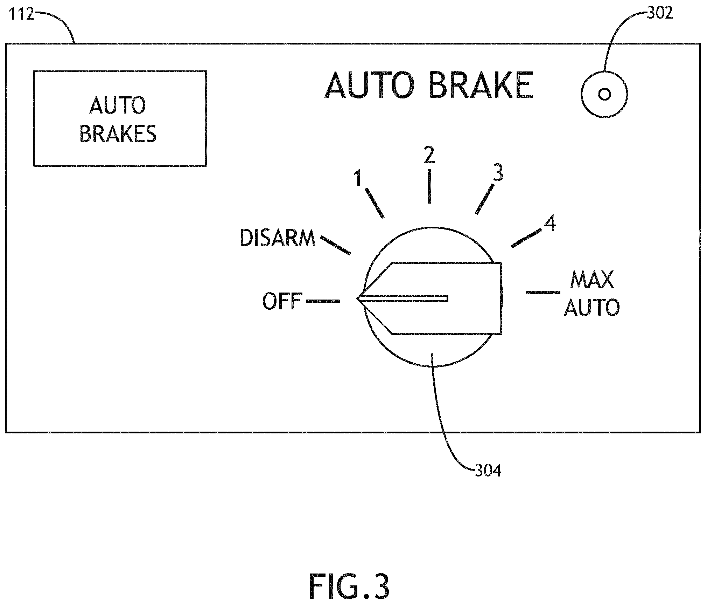

The ABS switch 112 may be configured to have a manual ABS switch setting to control the auto brake valve via a manual input selector 304, as shown in FIG. 3. The ABS switch 112 may include an indicator (e.g., a light emitting diode (LED) indicator 302).

The ROAAS 104 may be implemented as any suitable computing device. The ROAAS 104 may include any or all of the elements, as shown in FIG. 1. For example, the ROAAS 104 may include at least one processor 106, at least one memory 108 (e.g., which may maintain a trained artificial intelligence (Al) and/or machine learning (ML) model 110), and/or at least one storage, some or all of which may be communicatively coupled at any given time. For example, the at least one processor 106 may include at least one central processing unit (CPU), at least one graphics processing unit (GPU), at least one field-programmable gate array (FPGA), at least one application specific integrated circuit (ASIC), at least one digital signal processor, at least one deep learning processor unit (DPU), at least one virtual machine (VM) running on at least one processor, and/or the like configured to perform (e.g., collectively perform) any of the operations disclosed throughout. For example, the at least one processor 106 may include a CPU and a GPU configured to perform (e.g., collectively perform) any of the operations disclosed throughout. The processor 106 may be configured to run various software applications or computer code stored (e.g., maintained) in a non-transitory computer-readable medium (e.g., memory 108 and/or storage) and configured to execute various instructions or operations. For example, the processor 106 of the ROAAS 104 may be configured to: obtain ROAAS output data, the ROAAS output data including at least one of selected runway, runway distance remaining, runway stopping point, or runway condition; obtain a trained artificial intelligence (Al) and/or machine learning (ML) model; based at least on the ROAAS output data and the trained AI and/or ML model, infer an ABS brake setting; and/or set the auto brake valve in accordance with the ABS brake setting.

In some embodiments, if the ABS brake setting does not match the manual ABS switch setting, the at least one processor 106 may be configured to set the auto brake valve 116 in accordance with the ABS brake setting. In some embodiments, if the ABS brake setting does not match the manual ABS switch setting, the indicator (e.g., the LED indicator 302) may be configured to be activated (e.g., as lit or blinking) to inform a pilot that the ABS brake setting has been changed by the ROAAS 104.

In some embodiments, the ABS brake setting is overridable by the pilot interfacing with the ABS switch 112 to set the ABS switch 112 to the manual ABS switch setting. In some embodiments, the indicator (e.g., the LED indicator 302) may be deactivated when the ABS brake setting is overridden by the pilot interfacing with the ABS switch 112 to the manual ABS switch setting.

In some embodiments, the trained AI and/or ML model 110 may be trained using a supervised learning technique, such as a K-Fold cross-validation technique or a logistic regression model technique. A K-Fold cross validation technique may be used to identify the best model for a given set of problem, in which an input dataset is divided into K subsets and based on the output, a best fit model is chosen. A logistic regression model is a category of regression model, that may be used for the problems in which for a given set of inputs, output is a discreate or binary value, and for a current problem, output from logistic regression model can be used for automatically setting the desired braking level in the ABS. In some embodiments, the supervised learning technique involves learning from landing data obtained from different aircraft and such different aircraft's ABS switch settings.

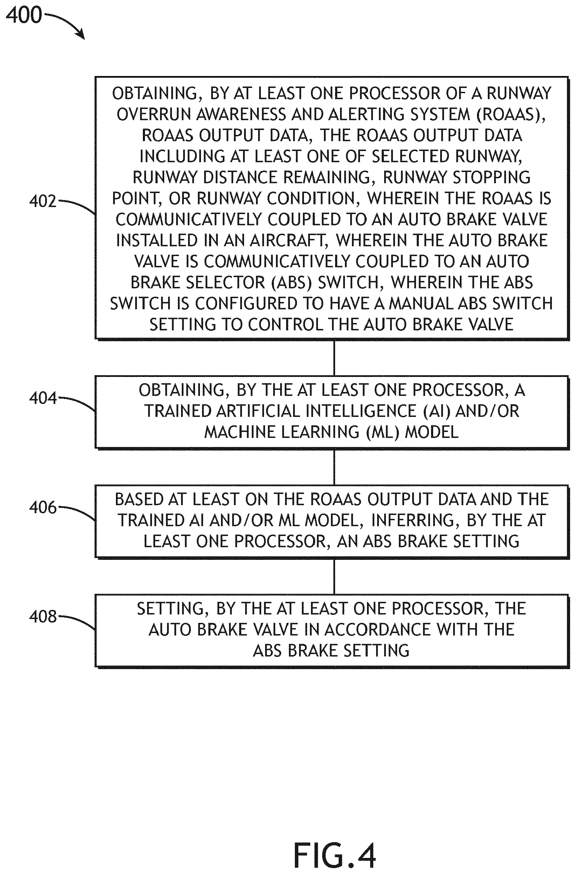

Referring now to FIG. 4, an exemplary embodiment of a method 400 according to the inventive concepts disclosed herein may include one or more of the following steps. Additionally, for example, some embodiments may include performing one or more instances of the method 400 iteratively, concurrently, and/or sequentially. Additionally, for example, at least some of the steps of the method 400 may be performed in parallel, iteratively, and/or concurrently. Additionally, in some embodiments, at least some of the steps of the method 400 may be performed non-sequentially.

A step 402 may include obtaining, by at least one processor of a runway overrun awareness and alerting system (ROAAS), ROAAS output data, the ROAAS output data including at least one of selected runway, runway distance remaining, runway stopping point, or runway condition, wherein the ROAAS is communicatively coupled to an auto brake valve installed in an aircraft, wherein the auto brake valve is communicatively coupled to an auto brake selector (ABS) switch, wherein the ABS switch is configured to have a manual ABS switch setting to control the auto brake valve.

A step 404 may include obtaining, by the at least one processor, a trained artificial intelligence (Al) and/or machine learning (ML) model.

A step 406 may include based at least on the ROAAS output data and the trained AI and/or ML model, inferring, by the at least one processor, an ABS brake setting.

A step 408 may include setting, by the at least one processor, the auto brake valve in accordance with the ABS brake setting.

Further, the method 400 may include any of the operations disclosed throughout.

Referring generally again to FIGS. 1-4, as will be appreciated from the above, embodiments of the inventive concepts disclosed herein may be directed to a method and system including an ROAAS configured to use an artificial intelligence (Al) and/or machine learning (ML) model to set an auto brake valve.

As used throughout and as would be appreciated by those skilled in the art, "at least one non-transitory computer-readable medium" may refer to as at least one non-transitory computer-readable medium (e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system, comprising:
an auto brake valve (116) installed in an aircraft (102);
an auto brake selector (ABS) switch (112) communicatively coupled to the auto brake valve (116), the ABS switch (112) configured to have a manual ABS switch setting to control the auto brake valve (116); and
a runway overrun awareness and alerting system (ROAAS) (104) communicatively coupled to the auto brake valve (116), the ROAAS (104) comprising at least one processor (106) configured to:
obtain ROAAS output data, the ROAAS output data including at least one of selected runway, runway distance remaining, runway stopping point, or runway condition;
obtain a trained artificial intelligence (Al) and/or machine learning (ML) model;
based at least on the ROAAS output data and the trained AI and/or ML model, infer an ABS brake setting; and
set the auto brake valve (116) in accordance with the ABS brake setting.

2. The system of claim 1, if the ABS brake setting does not match the manual ABS switch setting, the at least one processor (106) is configured to set the auto brake valve (116) in accordance with the ABS brake setting.

3. The system of claim 2, wherein the ABS switch (112) further comprises an indicator, wherein if the ABS brake setting does not match the manual ABS switch setting, the indicator is configured to be activated to inform a pilot that the ABS brake setting has been changed by the ROAAS (104), and preferably wherein if the ABS brake setting does not match the manual ABS switch setting, the indicator is configured to be activated as blinking to inform the pilot that the ABS brake setting has been changed by the ROAAS (104), and more preferably wherein the indicator is a light emitting diode (LED).

4. The system of claim 1, wherein the ABS brake setting is overridable by the pilot interfacing with the ABS switch (112) to set the ABS switch (112) to the manual ABS switch setting, and preferably wherein the ABS switch (112) further comprises an indicator, wherein the indicator is deactivated when the ABS brake setting is overridden by the pilot interfacing with the ABS switch (112) to the manual ABS switch setting, and more preferably wherein the indicator is a light emitting diode (LED).

5. The system of any preceding claim, further comprising a landing gear system, the landing gear system comprising the auto brake valve (116).

6. The system of any preceding claim, wherein the trained AI and/or ML model is trained using a supervised learning technique.

7. The system of claim 6, wherein the supervised learning technique involves learning from landing data obtained from different aircraft and such different aircraft's ABS switch settings.

8. The system of claim 7, wherein the trained AI and/or ML model is trained using a K-Fold cross-validation technique; and/or
wherein the trained AI and/or ML model is trained using a logistic regression model technique.

9. The system of claim 6, wherein the trained AI and/or ML model is trained using a K-Fold cross-validation technique.

10. The system of claim 6, wherein the trained AI and/or ML model is trained using a logistic regression model technique.

11. The system of any preceding claim, wherein the ROAAS output data includes the selected runway, the runway distance remaining, the runway stopping point, and the runway condition.

12. The system of any preceding claim, wherein at least some of the at least one processor (106) is installed in the aircraft.

13. The system of any preceding claim, wherein at least some of the at least one processor (106) is installed offboard of the aircraft.

14. The system of claim 1, wherein the ABS switch (112) is installed in the aircraft.

15. A method, comprising:
obtaining, by at least one processor of a runway overrun awareness and alerting system (ROAAS), ROAAS output data, the ROAAS output data including at least one of selected runway, runway distance remaining, runway stopping point, or runway condition, wherein the ROAAS is communicatively coupled to an auto brake valve installed in an aircraft, wherein the auto brake valve is communicatively coupled to an auto brake selector (ABS) switch, wherein the ABS switch is configured to have a manual ABS switch setting to control the auto brake valve;
obtaining, by the at least one processor, a trained artificial intelligence (Al) and/or machine learning (ML) model;
based at least on the ROAAS output data and the trained AI and/or ML model, inferring, by the at least one processor, an ABS brake setting; and
setting, by the at least one processor, the auto brake valve in accordance with the ABS brake setting.
